# EUROPEAN PATENT SPECIFICATION

(11) **EP 2 074 488 B1**
(45) Date of publication and mention of the grant of the patent: **10.11.2010**
(21) Application number: 06837608.6
(22) Date of filing: 14.11.2006
(51) Int. Cl.: G05B 19/43, F01D 21/18

(54) **DIRECT ACTING HYDRAULIC TRIP BLOCK WITH MAJORITY VOTING**
DIREKT WIRKENDER HYDRAULIK-TRIP-BLOCK MIT MEHRHEITSWAHLSYSTEM
BLOC DÉCLENCHEUR HYDRAULIQUE À ACTION DIRECTE À LOGIQUE ÉLECTIVE MAJORITAIRE

(30) Priority: 16.10.2006 US 581799
(43) Date of publication of application: 01.07.2009
(73) Proprietor: Elliott Company, Jeannette, PA 15644-1473 (US)
(72) Inventor: BLASER, Samuel, 8852 Altendorf (CH); VOGLER, Heinz, 8738 Uetilburg (CH)
(74) Representative: Intes, Didier Gérard André
(86) International application number: PCT/US2006/044255
(87) International publication number: WO 2008/048290

(56) References cited:
- EP-A1- 0 433 791
- EP-A1- 0 641 919
- DE-A1- 3 040 367
- DE-A1- 3 432 890
- US-A- 5 561 976

## Description

### BACKGROUND OF THE INVENTION

### Field of the Invention

This invention relates to a direct action hydraulic trip block for steam turbines and other applications.

### Description of Related Art

Apparatus for monitoring conditions and driving quick-closing valves by dumping control fluid wherein a majority determining switching logic is implemented are known, for example, from U.S. Patent No. 4,637,587 entitled "Facility for the Monitoring of Physical Quantities on Systems". Also, U.S. Patent No. 5,561,976, entitled "Redundant Trip Solenoid Valve Shut-off for Gas Turbine Fuel System", discloses a trip oil system in which hydraulic fluid circuits interconnect three solenoid-operated valves mounted on a frame assembly such that hydraulic fluid has to pass through at least two solenoid-operated valves in an open state for relieving pressure applied to a fuel shut-off valve, and in which each solenoid-operated valve comprises a cylinder, piston and return spring.

### SUMMARY OF THE INVENTION

It is an object of this invention to provide a hydraulic majority voting logic valve system in a single valve block.

Briefly, according to this invention, there is provided a direct acting hydraulic voting trip block comprising a valve block having three valve cylinders therein, three valve pistons in the valve cylinders, three springs for biasing the valve pistons in non-activated position, and three electric solenoid actuators for, in response to a non-fault signal, moving the piston against the bias of the springs into an activated position. The valve block defines three separate paths between an inlet port and an outlet port. Each path intersects the three valve cylinders. Each valve piston is configured to, in the activated position, block two of the three paths. Each valve piston is configured to close a different two of the three paths. Thus, as long as at least two of the pistons are in the activated position, communication between the inlet and outlet ports is prevented.

According to a preferred embodiment, the voting trip block is provided with three valve piston position monitors, one associated with each valve piston. Thus, a solenoid (one of the solenoid actuators) can be commanded to deactivate (to put the associated valve piston into a non-activated position) without allowing communication between the inlet and outlet ports and the response of the corresponding position monitor observed to determine that the associated solenoid (said one of the solenoid actuators), valve piston, and position monitor are in good running order.

According to a preferred embodiment, each piston extends axially between a solenoid actuator and a bias spring and has two enlarged diameter blocking sections for closing two paths when in the activated position and two smaller diameter unblocking sections adjacent the blocking portion for opening the two paths and a third elongated unblocking section for unblocking the third path in either the activated or non-activated position.

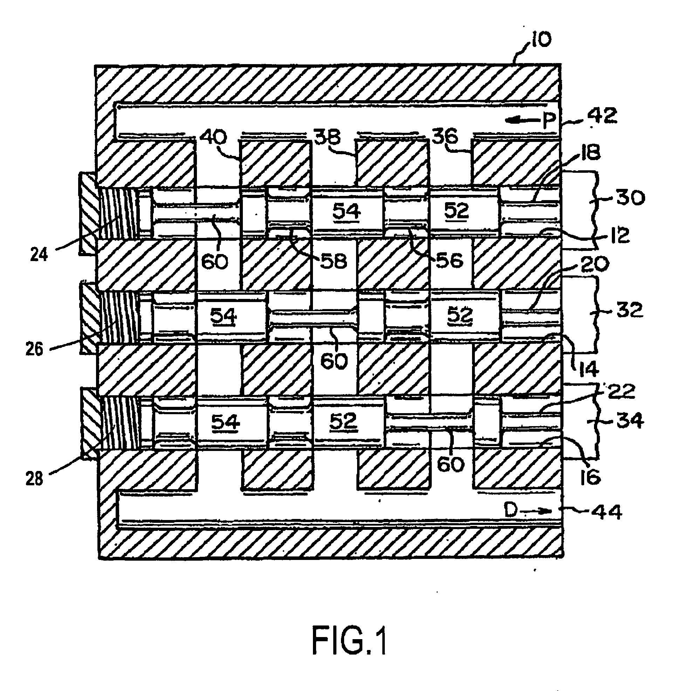

### BRIEF DESCRIPTION OF THE DRAWING

Further features and other objects and advantages will become clear from the following detailed description made with reference to the drawing which is a section view of one embodiment of a hydraulic voting trip block according to this invention.

### DESCRIPTION OF THE PREFERRED EMBODIMENTS

Referring to the drawing, a direct acting hydraulic voting trip block comprises a valve block 10 having three valves 12, 14, 16 cylinders therein. Three valve pistons 18, 20, 22 are located in the valve cylinders. Three springs 24, 26, 28 bias the valve pistons in the non-activated position. Three electric solenoid actuators 30, 32, 34 are provided for moving the pistons against the bias of the springs into an activated position. Typically, the solenoid actuators move the piston into an activated position when receiving a non-fault condition signal. The valve block defines three separate paths 36, 38, 40 between an inlet port 42 and an outlet port 44. Each path intersects the three valve cylinders. Each valve piston is configured to, in the activated position, block two of the three paths. Each valve piston is configured to close a different two of the three paths. Thus, as long as at least two of the pistons are in the activated position, communication between the inlet and outlet ports is prevented. Normally, the inlet port is in communication with a normally pressurized control port.

The voting trip block is provided with three valve piston position monitors 46, 48, 50, one associated with each valve piston. Thus, a solenoid (one of the solenoid actuators) can be commanded to deactivate (to put the associated valve piston into a non-activated position) without allowing communication between the inlet and outlet ports and the response of the corresponding position monitor observed to determine that the associated solenoid (said one of the solenoid actuators), valve piston, and position monitor are in good running order.

As shown in the drawing, each piston 18, 20, 22 extends axially between a solenoid actuator and a bias spring. Each piston has two enlarged diameter blocking sections 52, 54 for closing two paths when in the activated position and two smaller diameter unblocking sections 56, 58 adjacent the blocking portion for opening the two paths and a third elongated unblocking section 60 for unblocking the third path in either the activated or non-activated position.

As shown in the drawing of the preferred embodiment, the three valve cylinders have parallel and spaced axes. The three paths between the inlet and outlet ports have portions intersecting the valve cylinders which have parallel and spaced axes. The axes of the valve cylinders and the paths between the inlet and outlet ports are perpendicular. The bias springs and solenoids are at the opposite axial end of the valve cylinders. The solenoids are aligned on one face of the valve block.

## Claims

1. A direct acting hydraulic voting trip block comprising:
three valve cylinders (12, 14, 16);
three valve pistons (18, 20, 22) in the valve cylinders;
three springs (24, 26, 28) for biasing the valve pistons in a non-activated position;
three electric solenoid actuators (30, 32, 34) for in response to individual non-fault signals moving the corresponding valve pistons (18, 20, 22) against the bias of the springs into an activated position;
three separate paths (36, 38, 40) being defined between an inlet port (42) and an outlet port (44);
each valve piston (18, 20, 22) being configured to, in the activated position, obstruct two of the three paths (36, 38, 40) and each valve piston (18, 20, 22) being uniquely configured to obstruct a different two of the three paths (36, 38, 40);
whereby as long as at least two of the pistons are in the activated position communication between the inlet and outlet ports (42, 44) is prevented,
**characterized in that** said valve cylinders (12, 14, 16), valve pistons (18, 20, 22), and springs (24, 26, 28) are contained in a valve block (10),
**in that** said paths (36, 38, 40) are internal paths of said valve block (10),
and **in that** each path (36, 38, 40) intersects the three valve cylinders (12, 14, 16).

2. A direct acting hydraulic voting trip block according to claim 1, comprising three valve piston position monitors one associated with each valve piston (18, 20, 22) whereby one of said solenoid actuators (30, 32, 34) can be commanded to deactivate the associated valve piston without allowing communication between the inlet and outlet ports (42, 44) and the response of the corresponding position monitor can be observed to determine that said associated solenoid actuator, valve piston, and position monitor are in good running order.

3. A direct acting hydraulic voting trip block according to claim 1 or 2, wherein the three valve cylinders (12, 14, 16) have parallel and spaced axes.

4. A direct acting hydraulic voting trip block according to any one of claims 1 to 3, wherein the three paths (36, 38, 40) between the inlet and outlet ports (42, 44) have portions intersecting the valve cylinders (12, 14, 16) which have parallel and spaced axes.

5. A direct acting hydraulic voting trip block according to claim 4, wherein the axes of the valve cylinders (12, 14, 16) and the paths (36, 38, 40) between the inlet and outlet ports (42, 44) are perpendicular.

6. A direct acting hydraulic voting trip block according to any one of claims 1 to 5, wherein the bias springs (24, 26, 28) and solenoids are at the opposite axial ends of the valve cylinders (12, 14, 16).

7. A direct acting hydraulic voting trip block according to any one of claims 1 to 6, wherein the solenoid actuators (30, 32, 34) are aligned on one face of the valve block (10).

8. A direct acting hydraulic voting trip block according to any one of claims 1 to 7, wherein the inlet port (42) is in communication with a normally pressurized control port.

9. A direct acting hydraulic voting trip block according to any one of claims 1 to 8, wherein each piston (18, 20, 22) extends axially between a solenoid actuator (30, 32, 34) and a bias spring (24, 26, 28) and has two enlarged diameter blocking sections (52, 54) for closing two paths when in the activated position and two smaller diameter unblocking sections (56, 58) adjacent the blocking portion for opening the two paths and a third elongated unblocking section for unblocking the third path in either the activated or non-activated position.

10. A direct acting hydraulic voting trip block according to any one of claims 1 to 9, having at least one additional set of three valve cylinders and associated pistons, solenoid actuators and bias springs configured the same as the first set of valve cylinders.

## Patentansprüche

1. Direkt wirkender hydraulischer Auswahlauslöseblock, umfassend:
drei Ventilzylinder (12, 14, 16),
drei Ventilkolben (18, 20, 22) in den Ventilzylindern,
drei Federn (24, 26, 28) zum Vorspannen der Ventilkolben in eine unaktivierte Position,
drei elektrische Magnetstellantriebe (30, 32, 34) zum Bewegen der entsprechenden Ventilkolben (18, 20, 22) entgegen der Vorspannung der Federn in eine aktivierte Position nach Maßgabe einzelner Fehlerfreiheitssignale,
drei getrennte Wege (36, 38, 40), die zwischen einer Einlaßöffnung (42) und einer Auslaßöffnung (44) gebildet sind,
wobei jeder Ventilkolben (18, 20, 22) eine Konfiguration aufweist, um in der aktivierten Position zwei der drei Wege (36, 38, 40) zu blockieren, und jeder Ventilkolben (18, 20, 22) eine spezielle Konfiguration aufweist, um zwei andere der drei Wege (36, 38, 40) zu blockieren,
wodurch die Verbindung zwischen der Einlaßöffnung (42) und der Auslaßöffnung (44) verhindert ist, solange sich mindestens zwei von den Kolben in der aktivierten Position befinden,
**dadurch gekennzeichnet, daß** die Ventilzylinder (12, 14, 16), die Ventilkolben (18, 20, 22) und die Federn (24, 26, 28) in einem Ventilblock (10) enthalten sind,
daß die Wege (36, 38, 40) interne Wege des Ventilblocks (10) sind,
und jeder Weg (36, 38, 40) die drei Ventilzylinder (12, 14, 16) kreuzt.

2. Direkt wirkender hydraulischer Auswahlauslöseblock nach Anspruch 1, umfassend drei Positionsüberwacher für die Ventilkolben, wobei jedem Ventilkolben (18, 20, 22) einer zugeordnet ist, wodurch einem der Magnetstellantriebe (30, 32, 34) die Entaktivierung des zugeordneten Ventilkolbens ohne Zulassen einer Verbindung zwischen der Einlaßöffnung (42) und der Auslaßöffnung (44) befohlen werden und das Reaktionsvermögen des entsprechenden Positionsüberwachers ermittelt werden kann, um festzustellen, daß der zugeordnete Magnetstellantrieb, der Ventilkolben und der Positionsüberwacher in gutem Zustand laufen.

3. Direkt wirkender hydraulischer Auswahlauslöseblock nach Anspruch 1 oder 2, wobei die drei Ventilzylinder (12, 14, 16) parallele und beabstandete Achsen aufweisen.

4. Direkt wirkender hydraulischer Auswahlauslöseblock nach einem der Ansprüche 1 bis 3, wobei die drei Wege (36, 38, 40) zwischen der Einlaßöffnung (42) und der Auslaßöffnung (44) Abschnitte aufweisen, die die parallele und beabstandete Achsen aufweisenden Ventilzylinder (12, 14, 16) kreuzen.

5. Direkt wirkender hydraulischer Auswahlauslöseblock nach Anspruch 4, wobei die Achsen der Ventilzylinder (12, 14, 16) und die Wege (36, 38, 40) zwischen der Einlaßöffnung (42) und der Auslaßöffnung (44) senkrecht verlaufen.

6. Direkt wirkender hydraulischer Auswahlauslöseblock nach einem der Ansprüche 1 bis 5, wobei sich die Vorspannfedern (24, 26, 28) und die Magnetstellantriebe an den einander entgegengesetzten axialen Enden der Ventilzylinder (12, 14, 16) befinden.

7. Direkt wirkender hydraulischer Auswahlauslöseblock nach einem der Ansprüche 1 bis 6, wobei die Magnetstellantriebe (30, 32, 34) auf einer Fläche des Ventilblocks (10) ausgerichtet sind.

8. Direkt wirkender hydraulischer Auswahlauslöseblock nach einem der Ansprüche 1 bis 7, wobei die Einlaßöffnung (42) mit einer normalerweise unter Druck stehenden Steueröffnung in Verbindung steht.

9. Direkt wirkender hydraulischer Auswahlauslöseblock nach einem der Ansprüche 1 bis 8, wobei sich jeder Kolben (18, 20, 22) in Axialrichtung zwischen einem Magnetstellantrieb (30, 32, 34) und einer Vorspannfeder (24, 26, 28) erstreckt und in der aktivierten Position zwei Blockierungsabschnitte vergrößerten Durchmessers (52, 54) zum Verschließen zweier Wege und zwei Freigabeabschnitte kleineren Durchmessers (56, 58) angrenzend an den Blockierungsabschnitt zum Öffnen der zwei Wege sowie einen dritten, langgestreckten Freigabeabschnitt zum Freigeben des dritten Weges entweder in der aktivierten oder der unaktivierten Position besitzt.

10. Direkt wirkender hydraulischer Auswahlauslöseblock nach einem der Ansprüche 1 bis 9 mit mindestens einer zusätzlichen Gruppe von drei Ventilzylindern und den zugeordneten Kolben, Magnetstellantrieben und Vorspannfedern mit der gleichen Konfiguration wie bei der ersten Gruppe von Ventilzylindern.

## Revendications

1. Bloc déclencheur hydraulique à action directe à logique élective comportant :
trois cylindres de soupape (12, 14, 16) ;
trois pistons de soupape (18, 20, 22) dans les cylindres de soupape ;
trois ressorts (24, 26, 28) destinés à rappeler les pistons de soupape dans une position non activée ;
trois dispositifs d'actionnement à électroaimant (30, 32, 34) destinés à déplacer, en réponse à des signaux de non-défaillance individuels, les pistons de soupape correspondants (18, 20, 22) à l'encontre du rappel des ressorts dans une position activée ;
trois passages séparés (36, 38, 40) qui sont définis entre un orifice d'entrée (42) et un orifice de sortie (44) ;
chaque piston de soupape (18, 20, 22) étant configuré pour, dans la position activée, obstruer deux des trois passages (36, 38, 40) et chaque piston de soupape (18, 20, 22) étant uniquement configuré pour obstruer deux passages différents des trois passages (36, 38, 40) ;
de sorte que, tant que au moins deux des pistons sont dans la position activée, une communication entre les orifices d'entrée et de sortie (42, 44) est empêchée,
**caractérisé en ce que** lesdits cylindres de soupape (12, 14, 16), lesdits pistons de soupape (18, 20, 22), et lesdits ressorts (24, 26, 28) sont contenus dans un bloc de soupape (10),
**en ce que** lesdits passages (36, 38, 40) sont des passages internes dudit bloc de soupape (10),
et **en ce que** chaque passage (36, 38, 40) coupe les trois cylindres de soupape (12, 14, 16).

2. Bloc déclencheur hydraulique à action directe à logique élective selon la revendication 1, comportant trois dispositifs de contrôle de position de piston de soupape, un associé à chaque piston de soupape (18, 20, 22), de sorte que un desdits dispositifs d'actionnement à électroaimant (30, 32, 34) peut être commandé pour désactiver le piston de soupape associé sans permettre une communication entre les orifices d'entrée et de sortie (42, 44) et la réponse du dispositif de contrôle de position correspondant peut être observée afin de déterminer que ledit dispositif d'actionnement à électroaimant, ledit piston de soupape, et ledit dispositif de contrôle de position associés sont dans un bon état de fonctionnement.

3. Bloc déclencheur hydraulique à action directe à logique élective selon la revendication 1 ou 2, dans lequel les trois cylindres de soupape (12, 14, 16) ont des axes parallèles et espacés.

4. Bloc déclencheur hydraulique à action directe à logique élective selon l'une quelconque des revendications 1 à 3, dans lequel les trois passages (36, 38, 40) entre les orifices d'entrée et de sortie (42, 44) ont des parties coupant les cylindres de soupape (12, 14, 16) qui ont des axes parallèles et espacés.

5. Bloc déclencheur hydraulique à action directe à logique élective selon la revendication 4, dans lequel les axes des cylindres de soupape (12, 14, 16) et des passages (36, 38, 40) entre les orifices d'entrée et de sortie (42, 44) sont perpendiculaires.

6. Bloc déclencheur hydraulique à action directe à logique élective selon l'une quelconque des revendications 1 à 5, dans lequel les ressorts de rappel (24, 26, 28) et les électroaimants sont au niveau des extrémités axiales opposées des cylindres de soupape (12, 14, 16).

7. Bloc déclencheur hydraulique à action directe à logique élective selon l'une quelconque des revendications 1 à 6, dans lequel les dispositifs d'actionnement à électroaimant (30, 32, 34) sont alignés sur une face du bloc de soupape (10).

8. Bloc déclencheur hydraulique à action directe à logique élective selon l'une quelconque des revendications 1 à 7, dans lequel l'orifice d'entrée (42) est en communication avec un orifice de commande normalement sous pression.

9. Bloc déclencheur hydraulique à action directe à logique élective selon l'une quelconque des revendications 1 à 8, dans lequel chaque piston (18, 20, 22) s'étend axialement entre un dispositif d'actionnement à électroaimant (30, 32, 34) et un ressort de rappel (24, 26, 28) et a deux sections de blocage à diamètre agrandi (52, 54) pour la fermeture de deux passages dans la position activée et deux sections de déblocage de diamètre plus petit (56, 58) adjacentes à la partie de blocage pour l'ouverture des deux passages et une troisième section de déblocage allongée pour le déblocage du troisième passage dans la position activée ou non activée.

10. Bloc déclencheur hydraulique à action directe à logique élective selon l'une quelconque des revendications 1 à 9, ayant au moins un ensemble additionnel de trois cylindres de soupape et de pistons, de dispositifs d'actionnement à électroaimant et de ressorts de rappel associés configurés de la même manière que le premier ensemble de cylindres de soupape.
